# EUROPÄISCHE PATENTANMELDUNG

(11) **EP 4 707 668 A1**
(43) Veröffentlichungstag der Anmeldung: **11.03.2026**
(21) Anmeldenummer: 25197236.0
(22) Anmeldetag: 21.08.2025
(51) Int. Cl.: F21V 8/00

(54) **LICHTLEITER MIT TEILWEISE FACETTIERTEM KOLLIMATOR FÜR EINE ANZEIGEVORRICHTUNG**

(30) Priorität: 29.08.2024 DE 102024208216
(71) Anmelder: AUMOVIO Germany GmbH, 60488 Frankfurt am Main (DE)
(72) Erfinder: Fitterer, Alexander, 30175 Hannover (DE)
(74) Vertreter: Aumovio Corporation

(57) **Zusammenfassung**

Die vorliegende Erfindung betrifft einen Lichtleiter (400) für eine Anzeigevorrichtung (100) mit einem Display-Panel (200). Der Lichtleiter (400) weist einen Einkoppelbereich (420) mit einem Kollimator (421) auf, wobei der Kollimator (421) eine Nut (425) mit einer Einkoppelfläche (426) zum Einkoppeln von Licht (301) einer Lichtquelle (300) aufweist. Der Kollimator (421) wandelt das eingekoppelte Licht (301) mittels einer kollimierenden Kontur in kollimiertes Licht (310) um. Der Lichtleiter (400) weist einen Lichtleitbereich (460) zum Führen des kollimierten Lichts (310) entlang einer Achse (480) auf, wobei der Lichtleitbereich (460) eine Oberseite (461), die parallel zur Achse (480) ausgestaltet ist, und eine Unterseite (462), die relativ zur Achse (480) geneigt ist und eine Struktur (463) zum Umlenken des auf die Unterseite (462) auftreffenden kollimierten Lichts (310) als umgelenktes Licht (311) in Richtung der Oberseite (461) auf. Das umgelenkte Licht (311) wird an der Oberseite (461) des Lichtleitbereichs (460) aus dem Lichtleiter (400) ausgekoppelt. Der Lichtleiter (400) weist einen Umlenkbereich (470) mit einer Lichtumlenkfläche (471) zum Umlenken des kollimierten Lichts (310) in den Lichtleitbereich (460) auf, wobei die Lichtumlenkfläche (471) in einem Winkel (α1) von 45° zur Ausrichtung des kollimierten Lichts (310) und zur Achse (480) des Lichtleiterbereichs (460) angeordnet ist. Der Kollimator (421) weist eine Stufe (431-434) auf.

## Beschreibung

Die vorliegende Erfindung betrifft einen Lichtleiter für eine Anzeigevorrichtung zum Einbau in einem Kraftfahrzeug. Derartige Lichtleiter zur Hintergrundbeleuchtung eines Displays einer Anzeigevorrichtung finden heutzutage in nahezu jedem Kraftfahrzeug, beispielsweise einem Tachometer, Anwendung.

Hintergrundbeleuchtungen von Displays basieren hierbei in den meisten Fällen auf Lichtleitern, in die das Licht von mehreren Leuchtdioden (LED: Light Emitting Diode, Licht emittierende Diode) eingekoppelt wird. Das Licht propagiert im Lichtleiter durch Totalreflexion und wird mit Hilfe von Mikrostrukturen auf dem Lichtleiter wieder ausgekoppelt, sodass eine homogene Lichtverteilung entsteht.

Bei derartigen Hintergrundbeleuchtungen ist es oftmals erforderlich, das Licht nach dem Einkoppeln in den Lichtleiter um 90° umzulenken. Diese Umlenkung wird in der Regel unter Verwendung einer planaren Umlenkfläche oder einer gekrümmten Umlenkfläche realisiert. In beiden Fällen erfolgt eine planare Einkopplung des von einer Leuchtdiode ausgestrahlten Lichts, d.h. das ausgestrahlte Licht trifft auf eine planare Einkoppelfläche des Lichtleiters. Bei beiden Konzepten muss der Umlenkbereich aufgrund von ungewünschtem, unkontrolliertem Streulicht verdeckt werden. Hierzu ist oberhalb der Umlenkfläche im Umlenkbereich eine Blende zum Verdecken des ungewünschten, unkontrollierten Streulichts erforderlich.

Bei der Verwendung einer gekrümmten Umlenkfläche lässt sich grundsätzlich eine hohe Effizienz der Umlenkung erreichen. Die Effizienz wird dabei umso größer, je geringer die Krümmung der Umlenkfläche ist, das heißt je länger der gekrümmte Bereich ist.

Nachteilig dabei ist, dass mit steigender Effizienz die Länge des gekrümmten Bereichs, die Umlenkfläche, zunimmt und damit die Breite der Blende zum Verdecken für ungewünschtes, unkontrolliertes Streulicht immer größer wird, wodurch die zu hinterleuchtende Fläche eines Displays in seiner Größe eingeschränkt wird, was bei vielen Anwendungen unerwünscht ist. Insbesondere dann, wenn Displays mit einem sehr kleinen Rahmen realisiert werden sollen. Soll eine Umlenkung auf kleinem Raum realisiert werden, kommt es mit den beschriebenen Konzepten aufgrund von Streulicht zu Effizienzverlusten von 50% und mehr.

Vor diesem Hintergrund beschreibt US 2014/0003071 A1 eine optische Vorrichtung für ein Kraftfahrzeug, die eine Lichtquelle und einen Lichtleiter umfasst, der dazu bestimmt ist, von der Lichtquelle stammendes Licht in Form eines Strahls mit im Wesentlichen parallelen Strahlen zu leiten. Ein Kollimator konzentriert die von der Lichtquelle emittierten Lichtstrahlen, um den Strahl mit im Wesentlichen parallelen Strahlen zu erzeugen. Eine um 45° geneigte reflektierende Fläche lenkt den Strahl um 90° um. Für eine erneute Strahlumlenkung zur Lichtauskoppelung dienen eine Reihe von weiteren um 45° geneigten reflektierenden Flächen. Der Lichtaustritt aus dem Lichtleiter erfolgt dann unter Verwendung lichtbrechender Elemente in der Oberfläche des Lichtleiters.

Der vorliegenden Erfindung liegt die Aufgabe zugrunde, eine verbesserte Lösung für einen Einkoppelbereich eines Lichtleiters bereitzustellen, wodurch längere Lichtleiter einer Anzeigevorrichtung homogen hinterleuchtet werden.

Diese Aufgabe wird erfindungsgemäß durch einen Lichtleiter für eine Anzeigevorrichtung gemäß dem Oberbegriff des unabhängigen Anspruchs 1 gemeinsam mit den Merkmalen des kennzeichnenden Teils des unabhängigen Anspruchs 1 gelöst. Vorteilhafte Ausgestaltungen können den Unteransprüchen entnommen werden.

Die Erfindung sieht einen Lichtleiter für eine Anzeigevorrichtung mit einem Display-Panel vor, wobei der Lichtleiter einen Einkoppelbereich mit einem Kollimator aufweist, wobei der Kollimator eine Nut mit einer Einkoppelfläche zum Einkoppeln von Licht einer Lichtquelle aufweist, wobei der Kollimator das eingekoppelte Licht mittels einer kollimierenden Kontur in kollimiertes Licht umwandelt, wobei der Lichtleiter einen Lichtleitbereich zum Führen des kollimierten Lichts entlang einer Achse aufweist, wobei der Lichtleitbereich eine Oberseite, die parallel zur Achse ausgestaltet ist, und eine Unterseite, die relativ zur Achse geneigt ist und eine Struktur zum Umlenken des auf die Unterseite auftreffenden kollimierten Lichts als umgelenktes Licht in Richtung der Oberseite aufweist, wobei das umgelenkte Licht an der Oberseite des Lichtleitbereichs aus dem Lichtleiter ausgekoppelt wird, wobei die Struktur ausgestaltet ist, eine homogen flächige Hinterleuchtung der Oberseite des Lichtleitbereichs zu realisieren, wobei der Lichtleiter einen Umlenkbereich mit einer Lichtumlenkfläche zum Umlenken des kollimierten Lichts in den Lichtleitbereich aufweist, wobei die Lichtumlenkfläche in einem Winkel von 45° zur Ausrichtung des kollimierten Lichts und zur Achse des Lichtleiterbereichs angeordnet ist, wobei der Kollimator eine Stufe aufweist.

Bei der erfindungsgemäßen Lösung ist der Lichtleiter ausgebildet, das von einer Lichtquelle, z.B. einer LED, ausgestrahlte Licht, nachdem es in den Einkoppelbereich des Lichtleiters eingekoppelt wird, annähernd zu kollimieren. Hierbei wird das eingekoppelte Licht mittels einer kollimierenden Kontur des Kollimators in kollimiertes Licht umgewandelt. Das kollimierte Licht trifft dann unter einem definierten Winkeln auf die Lichtumlenkfläche des Umlenkbereichs und wird weiter in den Lichtleitbereich umgelenkt. Die Lichtumlenkfläche sorgt dafür, dass eine flächige, homogene Hinterleuchtung des Lichtleitbereichs erreicht wird. Ein Teil des eingekoppelten Lichts, welches nicht kollimiert wird, trifft auf eine Fläche der erfindungsgemäßen Stufe des Kollimators und wird gezielt in seinem Austrittswinkel geändert und umgelenkt, wodurch die Bildung von unerwünschtem, unkontrolliertem Streulicht vermieden wird. Die im Kollimator ausgebildete Stufe sorgt somit dafür, dass ein Teil des eingekoppelten Lichts in einer definierten Menge unter definierten Winkeln auf die Lichtumlenkfläche des Lichtleiters umgelenkt wird. Beim Auftreffen des von der Stufe kommenden Lichts auf die Lichtumlenkfläche erfolgt dann aufgrund des durch die Stufe geänderten Winkels keine Totalreflexion, sondern dass dort auftreffende Licht verlässt weitestgehend oder komplett den Lichtleiter im Bereich der Umlenkfläche in einem definierten Winkel. Dieses Licht kann genutzt werden, um einen in diesem Bereich befindlichen Teil des Display-Panels zu hinterleuchten. Der nicht nutzbare Rand des Displays kann so auf wenige Millimeter verringert werden, sodass sich nahezu randlose Display-Anzeigen realisieren lassen, ohne dass eine Blende im Umlenkbereich zum Verdecken von unerwünschtem, unkontrolliertem Streulicht vorgesehen ist.

Von besonderem Vorteil bei dem erfindungsgemäßen Lichtleiter ist, dass das von der Lichtquelle in den Einkoppelbereich eingekoppelte Licht durch die im Kollimator ausgebildete Stufe gezielt in seinem Austrittswinkel geändert und in einer definierten Menge unter einem definierten Winkeln auf die Lichtumlenkfläche des Lichtleiters umgelenkt wird. Hierdurch wird unerwünschtes, unkontrolliertes Streulicht im Umlenkbereich verhindert und das von der Stufenstruktur umgelenkte Licht sorgt dafür, dass eine homogene Hinterleuchtung eines Display-Panels im Umlenkbereich realisierbar ist.

Nach einer vorteilhaften Ausgestaltung der Erfindung weist die Stufe einen Schenkel und eine Flanke auf. Es hat sich herausgestellt, dass eine im Kollimator ausgebildete Stufe, die einen Schenkel und eine Flanke aufweist, besonders leicht herzustellen ist, da diese keine aufwendige Geometrie und Struktur von der Oberfläche aufweist. Des Weiteren hat sich herausgestellt, dass sich eine solche Ausgestaltung der Stufe bei der Herstellung, bspw. Spritzgussverfahren, besonders gut entformen lässt. Ein weiterer Vorteil besteht darin, dass eine Stufe besonders einfach an die kollimierende Kontur des Kollimators angepasst werden kann.

Nach einer vorteilhaften Ausgestaltung der Erfindung weist der Kollimator mindestens vier Stufen auf. Die Stufen ragen im bevorzugten Fall innerhalb der Kontur des Kollimators in den Kollimator hinein. In einem nicht gezeigten Fall können die Stufen auch nach außen, aus der Kontur des Kollimators herausragend ausgebildet sein. Im bevorzugten Fall weist jede der vier Stufen einen Schenkel und/oder eine Flanke auf. Nach einer vorteilhaften Ausgestaltung der Erfindung weist jede der vier Stufen jeweils einen Schenkel und eine Flanke auf. Nach einer weiteren nicht dargestellten Ausgestaltung kann eine Stufe auch nur einen Schenkel oder nur eine Flanke aufweisen. Eine solche Ausgestaltung ist dann sinnvoll, wenn der Lichtleiter zur einfachen Hinterleuchtung eines Display-Panels auf kleinem Raum genutzt werden soll. Es hat sich herausgestellt, dass eine solche Struktur im Kollimator mit mindestens vier Stufen, wobei jede der vier Stufen einen Schenkel und eine Flanke aufweist, für eine besonders flächige, homogene Lichtverteilung im sonst nicht nutzbaren Umlenkbereich des Lichtleiters sorgt. Ein weiterer Vorteil besteht somit darin, dass auf einfache Weise die gewünschte flächige, homogene Hinterleuchtung im Umlenkbereich und somit eine flächige, homogene Hinterleuchtung des Display-Panels in diesem Bereich realisierbar ist.

Nach einer vorteilhaften Ausgestaltung der Erfindung weist eine erste Stufe einen ersten Schenkel in einem Winkel zur Senkrechten zur Ausbreitungsrichtung des kollimierten Lichts in einem Winkelbereich zwischen 55° und 65°, vorzugsweise in einem Winkel von 60° auf.

Vorteilhafterweise weist eine zweite Stufe einen zweiten Schenkel in einem Winkel zur Senkrechten zur Ausbreitungsrichtung des kollimierten Lichts in einem Winkelbereich zwischen 75° und 85°, vorzugsweise in einem Winkel von 80° auf.

Vorteilhafterweise weist eine dritte Stufe einen dritten Schenkel in einem Winkel zur Senkrechen zur Ausbreitungsrichtung des kollimierten Lichts in einem Winkelbereich zwischen 85° und 95°, vorzugsweise einen Winkel von 90° auf.

Vorteilhafterweise weist eine vierte Stufe einen vierten Schenkel in einem Winkel zur Senkrechten zur Ausbreitungsrichtung des kollimierten Lichts in einem Winkelbereich zwischen 90° und 100°, vorzugsweise in einem Winkel von 95° auf. Es hat sich herausgestellt, dass ein Einkoppelbereich mit derartig ausgebildeten Stufen im Kollimator eine besonders effiziente Beleuchtung von Display-Panels auch im Umlenkbereich mit einer breiten Abstrahlcharakteristik ermöglicht. Ein weiterer Vorteil besteht darin, dass aufgrund der erfindungsgemäßen Stufen Lichtverluste des in den Lichtleiter eingekoppelten Lichts vermieden werden und hierdurch eine kompakte und effiziente Umlenkung des Lichts auf kleinem Raum realisierbar ist.

Nach einer vorteilhaften Ausgestaltung der Erfindung nehmen die Winkel der Schenkel zur Senkrechten zur Ausbreitungsrichtung des kollimierten Lichts von der Lichtquelle zu der Unterseite des Lichtleitbereichs zu. In der erfindungsgemäßen Struktur der im Kollimator ausgebildeten Stufen ist der Winkel des ersten Schenkels zur Senkrechten zur Ausbreitungsrichtung des kollimierten Lichts, der der Lichtquelle am nächsten liegt und am weitesten von der Unterseite des Lichtleitbereichs entfernt ist, kleiner dem Winkel des zweiten Schenkels. Der Winkel des zweiten Schenkels ist wiederum kleiner dem Winkel des dritten Schenkels und der Winkel des dritten Schenkels ist wiederum kleiner dem Winkel des vierten Schenkels, wobei der vierte Schenkel der Unterseite des Lichtleitbereichs am nächsten liegt. Es hat sich herausgestellt, dass der Kollimator mit derartigen Winkeln der Stufen eine besonders effiziente Beleuchtung von Display-Panels auch im Umlenkbereich mit einer breiten Abstrahlcharakteristik ermöglicht, wobei das Licht der Lichtquelle vollständig verwendet wird, ohne dass Verluste des eingekoppelten Lichts entstehen. Das von den Schenkeln umgelenkte Licht wird somit in der benötigten Intensität in Richtung der Umlenkfläche des Umlenkbereichs umgelenkt und im Umlenkbereich wieder ausgekoppelt, ohne dass einer Überleuchtung im Umlenkbereich und zu dem daran anschließenden Lichtleitbereich erfolgt.

Nach einer vorteilhaften Ausgestaltung der Erfindung weist die Flanke einen Winkel zur Senkrechten zur Ausbreitungsrichtung des kollimierten Lichts in einem Winkelbereich zwischen 15° und 90° auf. Nach einer vorteilhaften Ausgestaltung der Erfindung weist jede der vier Stufen jeweils eine Flanke auf.

Vorteilhafterweise weist eine erste Flanke, die an den ersten Schenkel der ersten Stufe anschließt, einen Winkel zur Senkrechten zur Ausbreitungsrichtung des kollimierten Lichts in einem Winkelbereich zwischen 15° und 25°, vorzugsweise in einem Winkel von 20° auf.

Vorteilhafterweise weist eine zweite Flanke, die an den zweiten Schenkel der zweiten Stufe anschließt, einen Winkel zur Senkrechten zur Ausbreitungsrichtung des kollimierten Lichts in einem Winkelbereich zwischen 40° und 50°, vorzugsweise in einem Winkel von 40° auf.

Vorteilhafterweise weist eine dritte Flanke, die an den dritten Schenkel der dritten Stufe anschließt, einen Winkel zur Senkrechten zur Ausbreitungsrichtung des kollimierten Lichts in einem Winkelbereich zwischen 40° und 50°, vorzugsweise in einem Winkel von 45° auf.

Vorteilhafterweise weist eine vierte Flanke, die an den vierten Schenkel der vierten Stufe anschließt, einen Winkel zur Senkrechten zur Ausbreitungsrichtung des kollimierten Lichts in einem Winkelbereich zwischen 80° und 90°, vorzugsweise in einem Winkel von 85° auf. Es hat sich herausgestellt, dass sich unerwünschtes, unkontrolliertes Streulicht, des von einer Lichtquelle in den Einkoppelbereich eingekoppelten Lichts, im Lichtleiter vermeiden lässt, wenn die einzelnen Flanken der jeweiligen Stufen in ihrem Winkel so zu dem eingekoppelten Licht ausgerichtet sind, dass die einzelnen Flanken nahezu parallel zu dem eingekoppelten Licht, welches auf die jeweiligen Schenkel der jeweiligen Stufen trifft, ausgerichtet sind. Zudem wird eine Überleuchtung im Einkoppelbereich und somit im Lichtleiter vermieden. Ein weiterer Vorteil besteht somit darin, dass der Einkoppelbereich aufgrund der im Kollimator ausgebildeten Stufen besonders einfach an den Aufbau der Anzeigevorrichtung, insbesondere an die Größe des zu hinterleuchtenden Display-Panels angepasst werden kann. Das heißt, dass der jeweilige Schenkel und die jeweilige Flanke einer Stufe in ihrer Anordnung so angepasst werden, dass der Einkoppelbereich des Lichtleiters in seiner Höhe und der Breite variiert werden kann, damit eine optimale Hinterleuchtung des Display-Panels im Einkoppelbereich erzielt wird. Somit lässt sich bei begrenzendem Bauraum aufgrund der im Einkoppelbereich im Kollimator ausgebildeten Stufen, der Abstand beispielsweise zwischen einer Lichtquelle und dem Umlenkbereich, auf einfach Weise variieren, ohne das unerwünschtes Streulicht entsteht und somit eine Blende hierfür erforderlich ist. Eine Höhenvariation von Einkoppelbereichen ist insbesondere bei Kombiinstrumenten mit integrierten Display-Panels von Vorteil.

Nach einer vorteilhaften Ausgestaltung der Erfindung weist der Kollimator zwischen der ersten Stufe und der zweiten Stufe eine erste kollimierende Kontur auf und die erste Stufe und die zweite Stufe sind mittels der ersten kollimierenden Kontur verbunden. Die kollimierende Kontur wird hierbei durch die bereits bestehende Kontur des Kollimators, zwischen der im Kollimator ausgebildeten ersten und der im Kollimator ausgebildeten zweiten Stufe gebildet. Es hat sich herausgestellt, dass eine erste kollimierende Kontur besonders vorteilhaft ist, damit das nicht vollständig kollimierte Licht und das nicht durch die erfindungsgemäße erste und zweite Stufen umgelenkte Licht, auf einfache Weise gezielt umgelenkt und genutzt werden kann, wodurch es zu keinem unerwünschten, unkontrollierten Streulicht und zu keiner Überleuchtung und somit zu einer flächigen, homogenen Lichtverteilung des eingekoppelten Lichts zwischen dem Umlenkbereich und dem Lichtleitbereichs des Lichteiters kommt.

Nach einer vorteilhaften Ausgestaltung der Erfindung weist der Kollimator zwischen der zweiten Stufe und der dritten Stufe eine zweite kollimierende Kontur auf und die zweite Stufe und die dritte Stufe sind mittels der zweiten kollimierenden Kontur verbunden. Es hat sich herausgestellt, dass ein weiterer Teil des nicht vollständig kollimierten Licht und das nicht durch die erfindungsgemäße zweite und dritte Stufe umgelenkte Licht, durch die zweite kollimierende Kontur gezielt in der benötigten Intensität in einen Bereich zwischen dem Umlenkbereich und dem Lichtleitbereich des Lichtleiters gelenkt und somit die gewünschte flächige homogene Hinterleuchtung des Display-Panels in diesem Bereich realisiert wird. Ein weiterer Vorteil besteht darin, dass es aufgrund einer ersten kollimierenden Kontur und einer zweiten kollimierenden Kontur zu keinen Verlusten des eingekoppelten Lichts kommt und das eingekoppelte Licht vollständig verwertet werden kann. Zudem kommt es zu keinem unerwünschten, unkontrollierten Streulicht und somit zu keiner Überleuchtung, wodurch unterschiedlich hellen Bereichen im Lichtleiter vermieden werden. Des Weiteren besteht ein Vorteil darin, dass die bereits bestehende Kontur des Kollimators zum Umlenken des eingekoppelten Lichts zwischen der ersten und zweiten Stufe sowie zwischen der zweiten und dritten Stufe genutzt werden kann, ohne dass eine aufwendig herzustellende Struktur des Kollimators entsteht.

Verwendung findet der erfindungsgemäße Lichtleiter in Anzeigevorrichtung, insbesondere im Automobilbereich, z.B. für ein zentrales Display in der Armaturentafel oder ein Kombiinstrument.

Weitere Merkmale der vorliegenden Erfindung werden aus der nachfolgenden Beschreibung und den angehängten Ansprüchen in Verbindung mit den Figuren ersichtlich. Vorteilhafte Weiterbildungen der Erfindung ergeben sich zudem auch durch die Merkmale der folgenden Beschreibung sowie den Figuren.

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

### Figurenübersicht

Es zeigen in schematischer, skizzenhafter Darstellung:
- Fig. 1: bekannte Konzepte zur Lichtumlenkung in einem Lichtleiter,
- Fig. 2: einen Schnitt durch einen bekannten Lichtleiter,
- Fig. 3: einen Schnitt durch eine Ausführungsform eines erfindungsgemäßen Lichtleiters;
- Fig. 4: einen Schnitt durch eine vergrößerte Darstellung einer Ausführungsform eines Einkoppelbereichs eines erfindungsgemäßen Lichtleiters;
- Fig. 5: einen Schnitt durch eine Anzeigevorrichtung mit einem erfindungsgemäßen Lichtleiter.

### Figurenbeschreibung

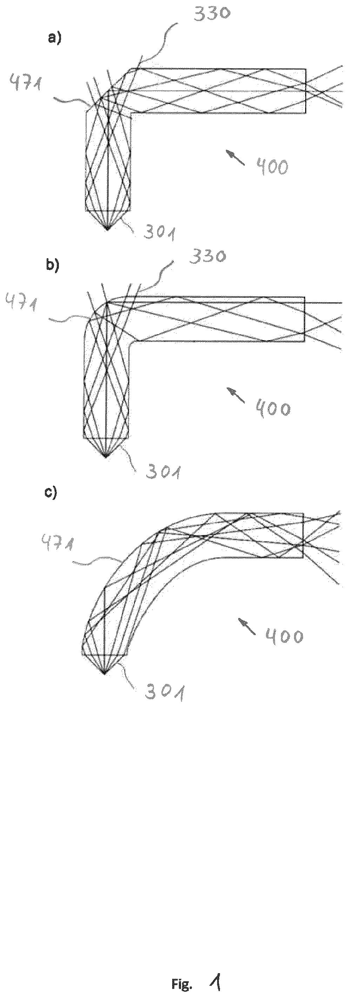

Fig. 1 zeigt bekannte Konzepte zur Lichtumlenkung in einem Lichtleiter 400. Bei Hintergrundbeleuchtungen ist es oftmals erforderlich, das Licht 301 nach dem Einkoppeln in den Lichtleiter 400 um 90° umzulenken. Bei einem ersten Konzept wird für diese Umlenkung eine planare Umlenkfläche 471 genutzt. Dieses Konzept ist in Fig. 1a) dargestellt und erreicht eine Effizienz der Umlenkung von ca. 50%. Bei einem weiteren Konzept wird für die Umlenkung eine gekrümmte Fläche 471 genutzt. Beispiele dafür sind in Fig. 1b) und Fig. 1c) gezeigt. In Fig. 1b) handelt es sich bei der gekrümmten Fläche 471 bzw. beim Schnitt durch die gekrümmte Fläche 471 um einen Kreisbogen. In Fig. 1c) handelt es sich hingegen um eine parabelförmige Umlenkung. In allen Fällen erfolgt eine planare Einkopplung des von einer in der Figur nicht dargestellten Lichtquelle, bspw. einer Leuchtdiode, ausgestrahlten Lichts 301, d.h. das ausgestrahlte Licht 301 trifft auf eine planare Einkoppelfläche des Lichtleiters 400. Bei beiden Konzepten muss der Bereich der Umlenkfläche 301 aufgrund von Streulicht mit einer in den Fig. 1a) bis 1c) nicht dargestellten Blende verdeckt werden.

Bei der Verwendung einer gekrümmten Umlenkfläche 471 lässt sich grundsätzlich eine hohe Effizienz der Umlenkung erreichen. Die Effizienz wird dabei umso größer, je geringer und somit flacher die Krümmung der Umlenkfläche ist. Während beispielsweise bei der in Fig. 1b) gezeigten Anordnung lediglich eine Effizienz von 40% erzielt wird, liegt die Effizienz der in Fig. 1c) gezeigten Anordnung bei 90%. Dies bedeutet allerdings, dass mit steigender Effizienz die Breite der Blende immer größer wird, was bei vielen Anwendungen unerwünscht ist.

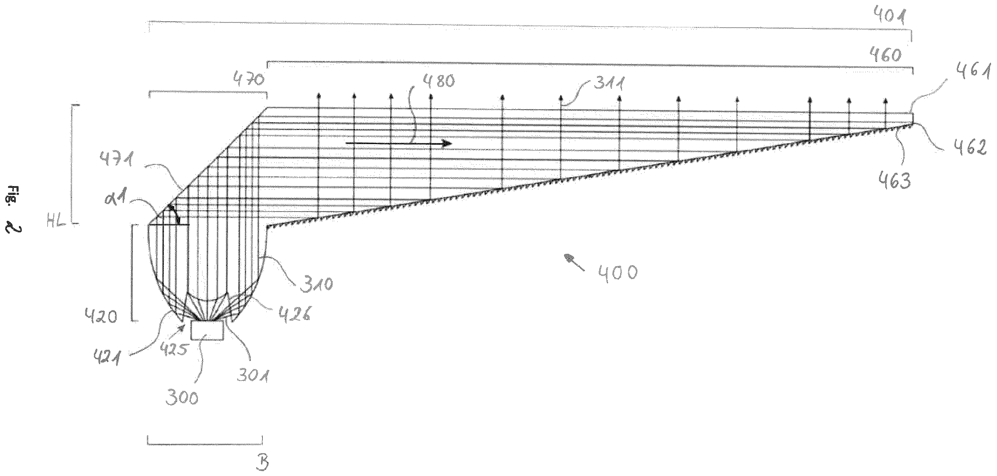

Fig. 2 zeigt einen Schnitt durch die Länge 401 eines bekannten Lichtleiters 400. Der gezeigte Lichtleiter 400 weist einen Einkoppelbereich 420 zum Einkoppeln von Licht 301 einer Lichtquelle 300, z.B. einer Single-Colour-LED, auf. Der Einkoppelbereich 420 weist einen Kollimator 421 zur Kollimation des Lichts 301 auf. Der Kollimator 421 kann zumindest teilweise auf Totalreflexion basieren.

Der Einkoppelbereichs 420 weist weiter eine Nut 425 als Einkoppelfläche in dem Kollimator 421 auf, wobei die Nut 424 mehrere, drei, zueinander ausgerichtete Einkoppelflächen 426 aufweist. Die Lichtquelle 300 ist im montierten Zustand mit dem Lichtleiter 400 unterhalb der Nut 425 des Kollimators 421 angeordnet. Die Einkopplung des von der Lichtquelle 300 ausgestrahlten Lichts 301, d.h. das ausgestrahlte Licht 301 trifft auf die einzelnen Einkoppelflächen 426 der Nut 425 und das ausgestrahlte Licht 301 wird in den Einkoppelbereich 420 des Lichtleiters 400 eingekoppelt. Der Kollimator 421 wandelt das in den Einkoppelbereich 420 eingekoppelte Licht 301 in kollimiertes Licht 310 um.

Ein Umlenkbereich 470 mit einer planaren Lichtumlenkfläche 471 dient zum Umlenken des kollimierten Lichts 310 in einen Lichtleitbereich 460. Die Lichtumlenkfläche 471 des Umlenkbereich 470 erstreckt sich hierbei über die gesamte Breite B des Kollimators 421. Im Lichtleitbereich 460 breitet sich dann wiederum das kollimierte Licht 310 aus, wobei das Ausbreitungsverhalten vorhersehbar ist. Die Lichtumlenkfläche 471 ist in einem Winkel α1 von 45° zur Ausrichtung des kollimierten Lichts 310 und zur Achse 480 des Lichtleiterbereichs 460 angeordnet.

Der Lichtleitbereich 460 dient zum Führen des kollimierten Lichts 310 entlang einer Achse 480. Der Lichtleitbereich 460 weist eine Oberseite 461 auf, die parallel zur Achse 480 ausgestaltet ist, und eine Unterseite 462, die relativ zur Achse 480 geneigt ist. Die Unterseite 462 weist eine Struktur 463 zum Umlenken des auf die Unterseite 462 auftreffenden kollimierten Lichts 310 in Richtung der Oberseite 461 des Lichtleiters 400 auf. Die Struktur 462 sorgt dafür, dass durch das in den Lichtleitbereich 460 umgelenkte kollimierte Licht 310 reflektiert und eine flächige, homogene Lichtverteilung im Lichtleitbereich 460 erreicht wird. Das kollimierte Licht 310 wird als Licht 311 an der Oberseite 461 des Lichtleitbereichs 460 wieder aus dem Lichtleiter 400 ausgekoppelt und zur Hinterleuchtung eines in Fig. 2 nicht dargestellten Display-Panels 200 verwendet. Die Struktur 463 auf der Unterseite 462 des Lichtleitbereichs 460 ist ausgestaltet, eine flächige Ausleuchtung der Oberseite 461 des Lichtleitbereichs 460 zu realisieren. Bei der Struktur 463 kann es sich um eine Microstruktur oder beispielsweise um eine Spiegelstruktur oder eine Gitterstruktur handeln. Die Struktur 463 ist auf der Außenseite der Unterseite 462 des Lichtleitbereichs 460 ausgebildet. In Fig. 2 sind der Einkoppelbereich 420 und der Umlenkbereich 470 für ein besseres Verständnis größer dargestellt, als dies für eine tatsächliche Realisierung des Lichtleiters 400 erforderlich ist.

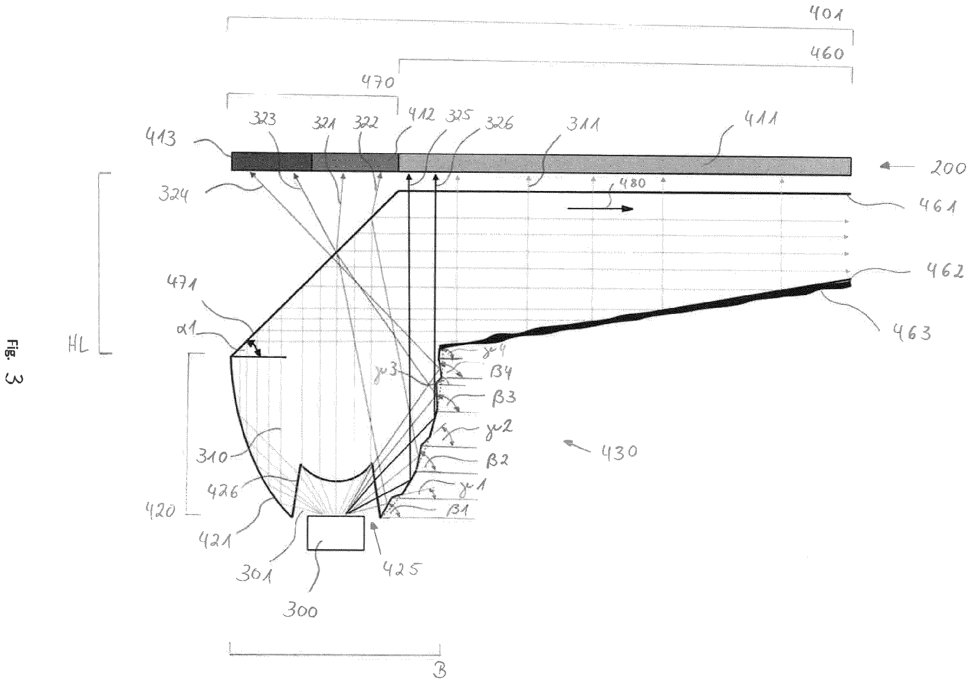

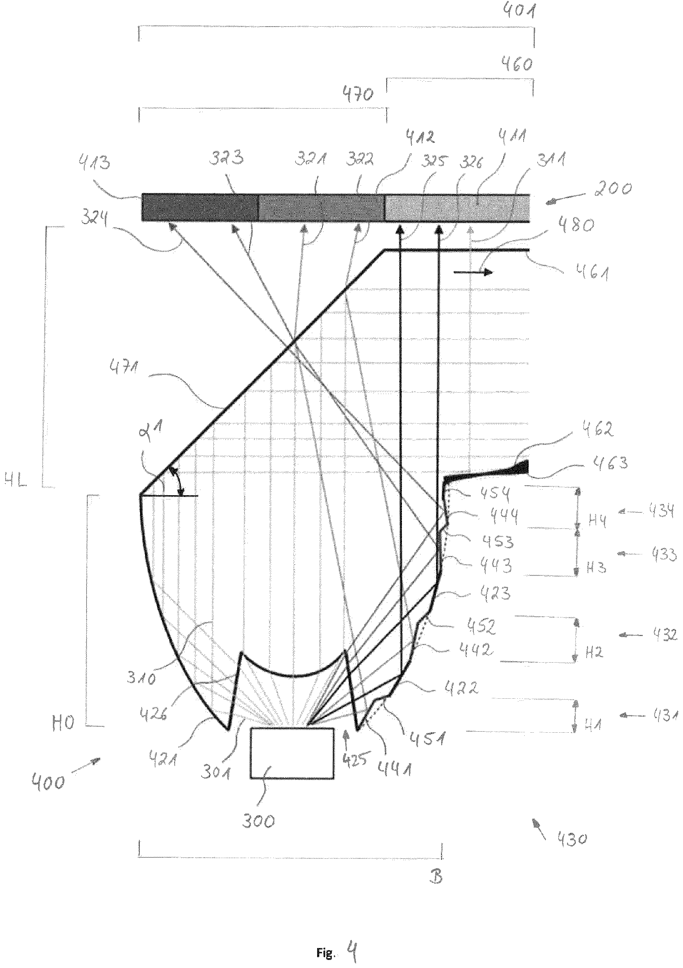

Fig. 3 zeigt einen Schnitt durch die Länge 401 einer Ausführungsform eines erfindungsgemäßen Lichtleiters 400. Der Lichtleiter 400 ist weitgehend identisch mit dem in Fig. 2 dargestellten Lichtleiter 400. Allerdings erstreckt sich die Lichtumlenkfläche 471 des Umlenkbereich 470 nicht wie in Fig. 2 dargestellt, über die gesamte Breite B des Kollimators 421. Die Umlenkfläche 471 des Umlenkbereich 470 ist kürzer und in ihrer Höhe HL flacher gegenüber dem in Fig. 2 beschriebenen bekannten Lichtleiter 400. Die Höhe HL ist auch die Höhe des an den Umlenkbereich 470 angrenzenden Lichtleitbereichs 460 in diesem Bereich. Die Höhe des Lichtleitbereichs 460 ist abhängig von der Höhe HL des Umlenkbereichs 470 und dementsprechend ebenfalls flacher gegenüber dem in Fig. 2 dargestellten Lichtleitbereich 460. Zudem weist der Lichtleiter 400 am Einkoppelbereich 420 auf einer Außenseite des Kollimators 421 eine in Richtung des Lichtleitbereichs 460 ausgebildete Stufenstruktur 430 auf. Die Stufenstruktur ist hierbei zwischen der Lichtquelle 300 und der Unterseite 462 des Lichtleitbereichs 460 am Kollimator 421 ausgebildet. In beispielhafter Ausführungsform weist die Stufenstruktur 430 mehrere, im Ausführungsbeispiel vier, Stufen 431-434 (siehe Fig. 4) auf. Die Stufen 431-434 sind zur Senkrechten der Ausbreitungsrichtung des kollimierten Lichts 310 und entgegen der Achse 480 des Lichtleitbereichs 460 geneigt. Jede der vier Stufen 431-434 weist wiederum jeweils einen Schenkel 441-444 und eine Flanke 451-454 auf. Die gezeigten vier Stufen 431-434 sind entlang der Kontur des Kollimators 421 ausgebildet. Die Stufen 431-434 ragen im bevorzugten Fall innerhalb der Kontur des Kollimators 421 in den Kollimator 421 hinein. Eine erste Flanke 451 einer ersten Stufe 431 verbindet einen ersten Schenkel 441 der ersten Stufe 431 mit einer an die erste Stufe 431 nachfolgenden ersten kollimierende Kontur 422, wobei die erste kollimierende Kontur 422 der äußeren Kontur des Kollimators 421 entspricht. Weiter weist die Stufenstruktur 430 eine zweite Stufe 432 auf, wobei die zweite Stufe 432 der ersten kollimierenden Kontur 422 nachfolgt. Ein zweiter Schenkel 442 der zweiten Stufe 432 ist mit einem freien Ende der ersten kollimierenden Kontur 422 verbunden, wobei die an den zweiten Schenkel 442 der zweiten Stufe 432 anschließende zweite Flanke 452 die zweite Stufe 432 mit einer an die zweite Flanke 452 anschließenden zweite kollimierenden Kontur 423 verbindet. Die zweite kollimierende Kontur 423 entspricht ebenfalls, wie die erste kollimierende Kontur 422, der äußeren Kontur des Kollimators 421. Die Stufenstruktur weist weiter eine dritte Stufe 433 auf, wobei die dritte Stufe 433 der zweiten kollimierenden Kontur 423 nachfolgt. Ein dritter Schenkel 443 der dritten Stufe 433 ist mit einem freien Ende der zweiten kollimierenden Kontur 423 verbunden, wobei die an den dritten Schenkel 443 der dritten Stufe 432 anschließende dritte Flanke 453 die dritte Stufe 433 mit einer an die dritte Flanke 453 anschließenden vierten Stufe 434 verbindet. Ein vierter Schenkel 444 der vierten Stufe 434 ist somit mit einem freien Ende der dritten Flanke 453 der dritten Stufe 433 verbunden, wobei eine an den vierten Schenkel 444 der vierten Stufe 434 anschließende vierte Flanke 454 die vierte Stufe 434 mit einer Unterseite 463 des Lichtleitbereichs 460 verbindet.

Das von der Lichtquelle 300 ausgestrahlte Lichts 301 trifft, wie zuvor in Fig. 2 beschrieben, auf die einzelnen Einkoppelflächen 426 der im Kollimator 421 ausgebildeten Nut 425 und das ausgestrahlte Licht 301 wird in den Einkoppelbereich 420 des Lichtleiters 400 eingekoppelt. Ein Teil des eingekoppelten Lichts 301 wird durch den Kollimator 421 in kollimiertes Licht 310 umgewandelt. Das kollimierte Licht 310 trifft unter einem definierten Winkeln in einer definierten Menge auf die planare Lichtumlenkfläche 471 des Umlenkbereichs 470 und wird weiter in den Lichtleitbereich 460 umgelenkt. Die Lichtumlenkfläche 471 weist hierbei einen Winkel α1 von 45° gegenüber der Senkrechten des kollimierten Lichts 310 und gegenüber der Achse 480 des Lichtleitbereichs 460 auf. Der Lichtleitbereich 460 führt das kollimierte Licht 310 entlang einer Achse 480, wobei sich das kollimierte Licht 310 im Lichtleitbereich 460 wieder ausbreitet. Das auf die Unterseite 462 des Lichtleitbereichs 460 auftreffende kollimierte Licht 310 wird wieder durch eine Struktur 463 in Richtung der Oberseite 461 des Lichtleitbereichs 460 umgelenkt. Das durch die Struktur 463 umgelenkte kollimierte Licht 310 wird an der Oberseite 461 des Lichtleitbereichs 460 als Licht 311 aus dem Lichtleiter 400 ausgekoppelt. Durch die auf der Unterseite 462 ausgebildete Struktur 463 wird eine flächige, homogene Ausleuchtung der Oberseite 461 des Lichtleitbereichs 460 und somit eine flächige, homogene Hinterleuchtung in einem ersten Bereich 411 des darüber angeordneten Display-Panels 200 realisiert.

Ein Teil des in den Lichtleiter 400 eingekoppelten Lichts 301, welches nicht im Einkoppelbereich 420 kollimiert und nicht als kollimiertes Licht 310 in den Lichtleitbereich 460 des Lichtleiters 400 umgelenkt wird, trifft auf eine Fläche der Schenkel 441-444 der Stufen 431-434 des Kollimators 421 und wird gezielt in seinem Austrittswinkel geändert und in Richtung der Lichtumlenkfläche 471 des Umlenkbereich 470 umgelenkt. Die am Kollimator 421 ausgebildeten Schenkel 441-444 der Stufen 431-434 sorgen somit dafür, dass ein Teil des eingekoppelten Lichts 301 in einer definierten Menge unter einem definierten Winkeln auf die Lichtumlenkfläche 471 des Lichtleiters 470 umgelenkt wird. Beim Auftreffen des von den Schenkeln 441-444 der Stufen 431-434 kommenden Lichts auf die Lichtumlenkfläche 471 erfolgt dann aufgrund des durch die Schenkel 441-444 der Stufen 431-434 geänderten Winkels keine Totalreflexion, sondern das auf die Lichtumlenkfläche 471 auftreffende Licht 321-324 verlässt weitestgehend oder komplett den Lichtleiter 400 im Bereich der Umlenkfläche 471 in einem definierten Winkeln.

Die Flächen der Schenkel 441-444 der Stufen 431-434 sind in einem Winkel β1- β4 zur Senkrechten der Ausbreitungsrichtung des kollimierten Lichts 310 und somit entgegen der Achse 480 des Lichtleitbereichs 460 geneigt, wodurch eine optimale Hinterleuchtung des Display-Panels 200 im Bereich der Lichtumlenkfläche 471 des Umlenkbereichs 470 sowie im Übergang zu dem daran angrenzenden Lichtleitbereich 460 erreicht wird. Im Ausführungsbeispiel weist die erste Stufe 431 einen ersten Schenkel 441 in einem Winkel β1 von 60° auf. Weiter weist die zweite Stufe 432 einen zweiten Schenkel 442 in einem Winkel β2 von 80° auf. Die dritte Stufe 433 weist einen dritten Schenkel 443 in einem Winkel β3 von 90° auf und die vierte Stufe 434 weist einen vierten Schenkel 444 in einem Winkel β4 von 95° auf. Die Winkel β1- β4 der einzelnen Schenkel 441-446 der vier Stufen 431-434 werden von der ersten Stufe 431 zu der vierten Stufe 434 immer größer, wodurch das auf die Flächen der Schenkel 441-444 treffende Licht gleichmäßig auf die Lichtumlenkfläche 471 verteilt und eine optimale Hinterleuchtung im Umlenkbereich 470 und im Übergang zu dem daran angrenzenden Lichtleitbereich 460 des Lichtleiters 400 erzielt wird.

Ein erster Teil des eingekoppelten Lichts 301, welches nicht kollimiert wird, trifft auf die Fläche des ersten Schenkels 441 der ersten Stufe 431 und auf die Fläche des zweiten Schenkels 442 der zweiten Stufe 432 und wird gezielt in seinem Austrittswinkel so geändert, dass das auf die beiden Flächen treffende Licht 301 in einer definierten Menge unter definierten Winkeln auf die Lichtumlenkfläche 471 des Lichtleiters 400 umgelenkt wird. Beim Auftreffen des von dem Schenkel 441 der ersten Stufe 431 und dem Schenkel 442 der zweiten Stufe 432 kommenden Lichts 301 auf die Lichtumlenkfläche 471, verlässt das dort auftreffende Licht nahezu komplett den Lichtleiter 400 im Bereich der Umlenkfläche 471 des Umlenkbereichs 470 in einem definierten Winkeln. Das aus dem Lichtleiter 400 ausgekoppelte Licht 321, 322 wird hierbei genutzt, um einen in diesem Bereich, einen zweiten Bereich 412, angeordneten Teil des Display-Panels 200 zu hinterleuchten. Dabei kann auch ein geringfügiger Anteil dieses Lichts 321, 322 Übergangsbereiche des an den zweiten Bereich 412 anschließenden ersten Bereichs 411 sowie des an den zweiten Bereich 412 anschließenden dritten Bereichs 413 des Display-Panels 200 hinterleuchten.

Ein zweiter Teil des eingekoppelten Lichts 301, welches wie zuvor beschrieben nicht kollimiert wird, trifft auf die Fläche des dritten Schenkels 443 der dritten Stufe 433 und auf die Fläche des vierten Schenkels 444 der vierten Stufe 434 und wird gezielt in seinem Austrittswinkel so geändert, dass das auf die beiden Flächen treffende Licht 301 in einer definierten Menge unter einem definierten Winkeln auf die Lichtumlenkfläche 471 des Lichtleiters 400 umgelenkt wird. Beim Auftreffen des von dem Schenkel 443 der dritten Stufe 433 und dem Schenkel 444 der vierten Stufe 434 kommenden Lichts 301 auf die Lichtumlenkfläche 471, verlässt das dort auftreffende Licht nahezu komplett den Lichtleiter 400 im Bereich der Umlenkfläche 471 des Umlenkbereichs 470 in einem definierten Winkeln. Das aus dem Lichtleiter 400 ausgekoppelte Licht 323, 324 wird hierbei genutzt, um einen in diesem Bereich, einen dritten Bereich 413, angeordneten Teil des Display-Panels 200 zu hinterleuchten. Dabei kann auch ein geringfügiger Anteil dieses Lichts 323, 324 einen Übergangsbereich im Übergang zu dem an den dritten Bereich 413 anschließenden zweiten Bereich 412 hinterleuchten.

Ein weiterer Teil des in den Lichtleiter eingekoppelten Lichts 301, welches nicht im Einkoppelbereich 420 kollimiert und nicht als kollimiertes Licht 310 in den Lichtleitbereich 460 des Lichtleiters 400 umgelenkt wird, wird auf eine erste kollimierende Kontur 422 des Kollimators 421, die zwischen der ersten Stufe 431 und der zweiten Stufe 432 angeordnet ist und diese miteinander verbindet, sowie auf eine zweite kollimierende Kontur 423 des Kollimators 421, die zwischen der zweiten Stufe 433 und der dritten Stufe 434 angeordnet ist und diese miteinander verbindet, gelenkt. Das von der ersten kollimierenden Kontur 422 und das von der zweiten kollimierenden Kontur 423 kommende Licht 301 wird weiter in Richtung der Oberseite 461 des Lichtleitbereichs 460 umgelenkt und wieder aus dem Lichtleiter 400 ausgekoppelt. Das aus dem Lichtleiter 400 ausgekoppelte Licht 325 von der ersten kollimierenden Kontur 422 und das aus dem Lichtleiter 400 ausgekoppelte Licht 326 von der zweiten kollimierenden Kontur 423 wird hierbei genutzt, um einen in diesem Bereich, dem ersten Bereich 411, angeordneten Teil des Display-Panels 200 zu hinterleuchten. Das ausgekoppelte Licht 325, 326 sorgt dafür, dass im Übergangsbereich zwischen dem ersten Bereich 411 und dem daran anschließenden zweiten Bereich 412 eine gleichmäßige, homogene Hinterleuchtung des Display-Panels 200 erfolgt, ohne dass es zu einer Überleuchtung im ersten Bereich 411 und dem daran anschließenden zweiten Bereich 412 kommt. Dabei kann auch ein geringfügiger Anteil dieses Lichts 325, 326 den Übergangsbereich des an den ersten Bereich 411 anschließenden zweiten Bereich 412 hinterleuchten. Somit wird einer homogenen Lichtverteilung des eingekoppelten Lichts 301 im Lichtleiter erreicht und durch die erfindungsgemäßen Stufen 431-434 sowie die erste kollimierende Kontur 422 und die zweite kollimierende Kontur 423 das eingekoppelte Licht 301 in der benötigten Intensität in einen ersten Bereich 411, einen zweiten Bereich 412 und einen dritten Bereich 413 oberhalb des Lichtleitbereichs 460 und des daran angrenzenden Umlenkbereich 470 gelenkt, damit die gewünschte flächige, homogene Hinterleuchtung des darüber angeordneten Display-Panels 200 realisiert wird. Hierdurch kommt es zu keinen Verlusten des eingekoppelten Lichts 301 und das in den Lichtleiter 400 eingekoppelte Licht 301 kann vollständig genutzt werden, um ein Display-Panel 200 über die gesamte Länge 401 des Lichtleiters 400 zu hinterleuchten. Der nicht nutzbare Rand des Displays kann so auf wenige Millimeter verringert werden.

Fig. 4 zeigt einen Schnitt durch eine vergrößerte Darstellung einer Ausführungsform eines Einkoppelbereichs 420 eines erfindungsgemäßen Lichtleiters 400. Der Lichtleiter 400 ist identisch mit dem in Fig. 3 dargestellten Lichtleiter 400. Der Einkoppelbereich 420 des Lichtleiters 400 weist eine Höhe H0 und eine Breite B auf. Die im Ausführungsbeispiel dargestellte erfindungsgemäße erste Stufen 431, zweite Stufe 432, dritte Stufe 433 und vierte Stufe 434 weisen jeweils eine Höhe H1 bis H4 auf. Die Höhen H1-H4 der Stufen 431-434 sind abhängig von der Größe des zu hinterleuchtenden zweiten Bereichs 412 und des zu hinterleuchtenden dritten Bereichs 413 des Display-Panels 200. Die Höhe H1-H4 der Stufen 431-434 kann wie in dem Ausführungsbeispiel dargestellt, einheitlich ausgebildet sein. Je nach Anwendungsfall können die einzelnen Stufen 431-434 auch in ihrer Höhe H1-H4 variieren und nicht einheitlich in ihrer Höhe H1-H4 ausgebildet sein. Die Höhe H1-H4 der einzelnen Stufen 431-434 ist von den dem jeweiligen Winkel β1-β4 eines Schenkels 441-444 und von dem jeweiligen Winkel γ1-γ4 einer jeweiligen Flanke 451-454 einer Stufe 431-434 abhängig. Dementsprechend kann auch die erste kollimierende Kontur 422 und die zweite kollimierende Kontur 423 in ihrer Ausgestaltung variieren.

Aufgrund der Stufenstruktur 430 kann der Einkoppelbereich 420 durch eine einfache Anpassung der einzelnen Höhen H1-H4 der Stufen 431-434 an den konkreten Aufbau einer Anzeigevorrichtung, insbesondere an die Größe eines Display-Panels 200, welches hinterleuchtet werden soll, angepasst werden, d.h. die Höhe H1-H4 der einzelnen Stufen 431-434 kann auf einfache Weise variiert werden. Hierdurch lassen sich auch die Winkel β1-β4 der Schenkel 441-444 sowie die Winkel γ1-γ4 der Flanken 451-454 variieren. Dies hat zum Vorteil, dass je nach Anwendungsfall eine kompakte Bauweise des Lichtleiters realisierbar ist, da die Höhe H0 und die Breite B des Kollimators 421 je nach Anwendungsfall variiert werden kann und somit eine flächige, homogene Hinterleuchtung des Display-Panels 200 über die gesamte Länge 401 des Lichtleiters 400 möglich ist, ohne das Lichtverluste entstehen.

Aufgrund der erfindungsgemäßen Stufen 431-434 der Stufenstruktur 430 des Kollimators 421 lässt sich die Höhe HL des Umlenkbereichs 470 und dem daran anschließenden Lichtleitbereichs 460 individuell anpassen und im bevorzugten Fall in der Höhe HL verkleinern. Hierzu wird die Höhe H1-H4 der Stufen 431-434 auf die erforderlichen Winkel β1-β4 der Schenkel 441-444 und die Winkel γ1-γ4 der Flanken 451-454 angepasst und geändert, wodurch das Licht gezielt in seinem Austrittwinkel so geändert und auf die Lichtumlenkfläche 471 umgelenkt wird, damit eine flächige, homogene Hinterleuchtung des Display-Panels 200 über die gesamte Länge 401 des Lichtleiters 400 erreicht wird. Da die Höhe der HL des Umlenkbereichs 470 bei der Auslegung eines erfindungsgemäßen Lichtleiters 400 variabel anpassbar ist, kann nach Bedarf der benötigten Intensität zur Hinterleuchtung im Umlenkbereich 470, die Kontur des Kollimators 461 mehrere unabhängig voneinander abhängige Stufen in einer Ausgestaltung aufweisen.

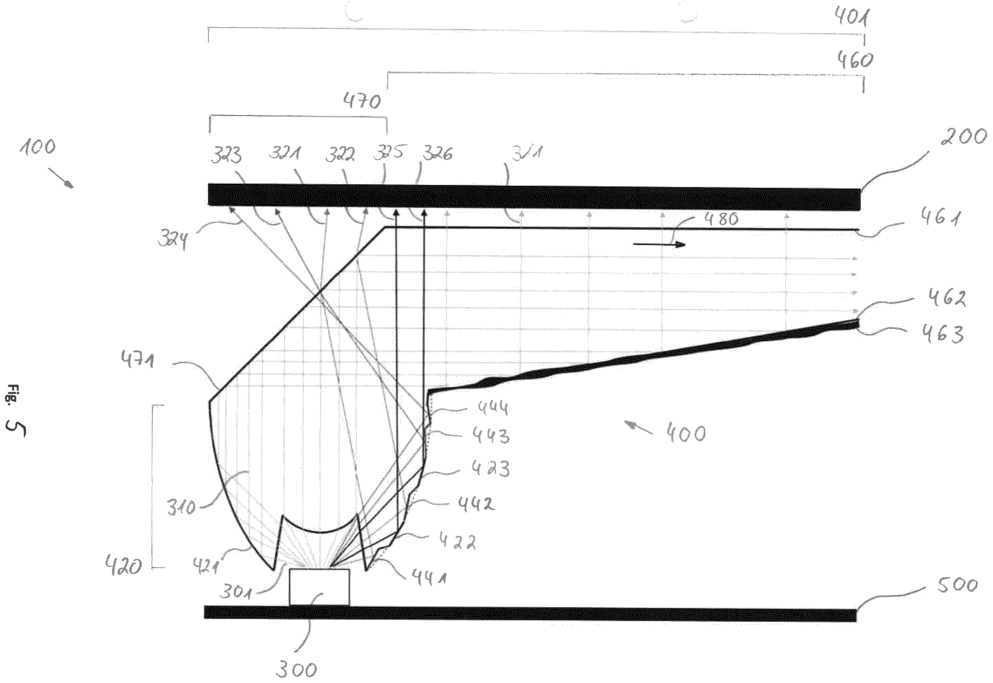

Fig. 5 zeigt einen Schnitt durch eine Anzeigevorrichtung 100 mit einem erfindungsgemäßen Lichtleiter 400 im montierten Zustand. Bei dieser Ausführungsform ist die Lichtquelle 300, deren Licht 301 durch den Lichtleiter 400 verteilt werden soll, auf einer Leiterplatte 500 der Anzeigevorrichtung 100 angeordnet. Das von der Lichtquelle 300 ausgestrahlte Licht 301 wird im Einkoppelbereich 420 in den Lichtleiter 400 eingekoppelt. Der Einkoppelbereich 420 weist einen Kollimator 461 auf, wobei das eingekoppelte Licht 301 teilweise in kollimiertes Licht 310 umgewandelt und mittels der Umlenkfläche 471 des Umlenkbereichs 470 in den Lichtleitbereich 460 des Lichtleiters 400 umgelenkt wird. Dort wird das kollimierte Licht 310 in Richtung der Oberseite 461 des Lichtleiters 400 umgelenkt, und als Licht 311 ausgekoppelt, wo es nach dem Austritt aus dem Lichtleiter 400 zur Hinterleuchtung eines Display-Panels 200 im Lichtleitbereich 460 dient. Ein Teil des in den Lichtleiter 400 eingekoppelten Lichts 301, das nicht kollimierte Licht 310, wird durch die erfindungsgemäßen Schenkel 441-444 der Stufen 431-434 des Kollimators 421 in seinem Austrittswinkel geändert und im Umlenkbereich 470 wieder aus dem Lichtleiter 400 ausgekoppelt. Das ausgekoppelte Licht 321-326 wird zur Hinterleuchtung des Display-Panels 200 im Bereich des Umlenkbereich 470 verwendet. Ein weiterer Teil des in Lichts 301 wird über die erste kollimierende Kontur 422 und die zweite kollimierende Kontur 423 in Richtung der Oberseite 461 des Lichtleiters 400 umgelenkt, und als Licht 325, 326 ausgekoppelt, wo es nach dem Austritt aus dem Lichtleiter 400 zur Hinterleuchtung eines Display-Panels 200 im Übergangsbereich zwischen dem Lichtleitbereich 460 und dem Umlenkbereich 470 dient.

Insgesamt zeigt das Ausführungsbeispiel, wie durch die Erfindung in einfacher Weise ein Lichtleiter mit den erfindungsgemäßen Stufen sowie einer ersten kollimierenden Kontur und einer zweiten kollimierenden Kontur des Kollimators ausgebildet sein kann, damit bei einem geringem Bauraumbedarf eine homogene Lichtverteilung im Lichtleiter und somit eine flächige, homogene Hinterleuchtung eines Display-Panels über die gesamte Länge des Lichtleiters in der benötigten Intensität erreicht wird, ohne das Lichtverluste entstehen. Aufgrund der erfindungsgemäßen Stufen sowie der ersten kollimierenden Kontur und der zweiten kollimierenden Kontur lassen sich längere Lichtleiter einer Anzeigevorrichtung für eine flächige, homogene Hinterleuchtung größere Displays über die gesamte Länge des Lichtleiters mit einem sehr kleinen Rahmen realisieren. Bei längeren Lichtleitern werden stärkere Lichtquellen benötigt, um über die gesamte Länge des Lichtleiters eine gleichmäßige Lichtmenge auskoppeln zu können. Da dann auch eine größere Lichtmenge auf die Stufen gelangt, was einer größeren Lichtmenge im Umlenkbereich entspricht, kann man die Stufen kleiner auslegen oder eine andere Gestaltung der Stufen wählen oder eine geringere Anzahl an Stufen vorsehen und so eine gleichmäßige Ausleuchtung erreichen.

### Bezugszeichenliste

- 100: Anzeigevorrichtung
- 200: Display-Panel
- 300: Lichtquelle
- 301: Einzukoppelndes Licht
- 310: Kollimiertes Licht
- 311: Umgelenktes Licht
- 321: Umgelenktes Licht
- 322: Umgelenktes Licht
- 323: Umgelenktes Licht
- 324: Umgelenktes Licht
- 325: Umgelenktes Licht
- 326: Umgelenktes Licht
- 330: Streulicht
- 400: Lichtleiter
- 401: Länge Lichtleiter
- 411: Erster Bereich
- 412: Zweiter Bereich
- 413: Dritter Bereich
- 420: Einkoppelbereich
- 421: Kollimator
- 422: Erste Kontur
- 423: Zweite Kontur
- 425: Nut
- 426: Fläche
- 430: Stufenstruktur
- 431: Erste Stufe
- 432: Zweite Stufe
- 433: Dritte Stufe
- 434: Vierte Stufe
- 441: Schenkel
- 442: Schenkel
- 443: Schenkel
- 444: Schenkel
- 451: Flanke
- 452: Flanke
- 453: Flanke
- 454: Flanke
- 460: Lichtleitbereich
- 461: Oberseite
- 462: Unterseite
- 463: Struktur
- 470: Umlenkbereich
- 471: Lichtumlenkfläche
- 480: Achse
- 500: Leiterplatte
- HL: Höhe Lichtleitbereich
- H0: Höhe Kollimator
- H1: Höhe erste Stufe
- H2: Höhe zweite Stufe
- H3: Höhe dritte Stufe
- H4: Höhe vierte Stufe
- H5: Höhe fünfte Stufe
- H6: Höhe sechste Stufe
- B: Breite Kollimator
- α1: Winkel
- β1: Winkel
- β2: Winkel
- β3: Winkel
- β4: Winkel
- γ1: Winkel
- γ2: Winkel
- γ3: Winkel
- γ4: Winkel

## Patentansprüche

1. Lichtleiter (400) für eine Anzeigevorrichtung (100) mit einem Display-Panel (200),
wobei der Lichtleiter (400) einen Einkoppelbereich (420) mit einem Kollimator (421) aufweist,
wobei der Kollimator (421) eine Nut (425) mit einer Einkoppelfläche (426) zum Einkoppeln von Licht (301) einer Lichtquelle (300) aufweist,
wobei der Kollimator (421) das eingekoppelte Licht (301) mittels einer kollimierenden Kontur in kollimiertes Licht (310) umwandelt,
wobei der Lichtleiter (400) einen Lichtleitbereich (460) zum Führen des kollimierten Lichts (310) entlang einer Achse (480) aufweist,
wobei der Lichtleitbereich (460) eine Oberseite (461), die parallel zur Achse (480) ausgestaltet ist, und eine Unterseite (462), die relativ zur Achse (480) geneigt ist und eine Struktur (463) zum Umlenken des auf die Unterseite (462) auftreffenden kollimierten Lichts (310) als umgelenktes Licht (311) in Richtung der Oberseite (461) aufweist,
wobei das umgelenkte Licht (311) an der Oberseite (461) des Lichtleitbereichs (460) aus dem Lichtleiter (400) ausgekoppelt wird,
wobei die Struktur (463) ausgestaltet ist, eine homogen flächige Hinterleuchtung der Oberseite (461) des Lichtleitbereichs (460) zu realisieren,
wobei der Lichtleiter (400) einen Umlenkbereich (470) mit einer Lichtumlenkfläche (471) zum Umlenken des kollimierten Lichts (310) in den Lichtleitbereich (460) aufweist,
wobei die Lichtumlenkfläche (471) in einem Winkel (α1) von 45° zur Ausrichtung des kollimierten Lichts (310) und zur Achse (480) des Lichtleiterbereichs (460) angeordnet ist,
**dadurch gekennzeichnet,**
**dass** der Kollimator (421) eine Stufe (431-434) aufweist.

2. Lichtleiter (400) nach Anspruch 1, **dadurch gekennzeichnet, dass** die Stufe (431-434) einen Schenkel (441-444) und eine Flanke (451-454) aufweist.

3. Lichtleiter (400) nach einem der vorherigen Ansprüche1 und 2, **dadurch gekennzeichnet, dass** der Kollimator (421) mindestens vier Stufen (431, 432, 433, 434) aufweist .

4. Lichtleiter (400) nach einem der vorherigen Ansprüche1 bis 3, **dadurch gekennzeichnet, dass** eine erste Stufe (431) einen ersten Schenkel (441) in einem Winkel (β1) zur Senkrechten zur Ausbreitungsrichtung des kollimierten Lichts (310) in einem Winkelbereich zwischen 55° und 65°, vorzugsweise in einem Winkel (β1) von 60° aufweist.

5. Lichtleiter (400) nach einem der vorherigen Ansprüche1 bis 4, **dadurch gekennzeichnet, dass** eine zweite Stufe (432) einen zweiten Schenkel (442) in einem Winkel (β2) zur Senkrechten zur Ausbreitungsrichtung des kollimierten Lichts (310) in einem Winkelbereich zwischen 75° und 85°, vorzugsweise in einem Winkel (β2) von 80° aufweist.

6. Lichtleiter (400) nach einem der vorherigen Ansprüche1 bis 5, **dadurch gekennzeichnet, dass** eine dritte Stufe (433) einen dritten Schenkel (443) in einem Winkel (β3) zur Senkrechen zur Ausbreitungsrichtung des kollimierten Lichts (310) in einem Winkelbereich zwischen 85° und 95°, vorzugsweise einen Winkel (β3) von 90° aufweist.

7. Lichtleiter (400) nach einem der vorherigen Ansprüche1 bis 6, **dadurch gekennzeichnet, dass** eine vierte Stufe (434) einen vierten Schenkel (444) in einem Winkel (β4) zur Senkrechten zur Ausbreitungsrichtung des kollimierten Lichts (310) in einem Winkelbereich zwischen 90° und 100°, vorzugsweise in einem Winkel (β4) von 95° aufweist.

8. Lichtleiter (400) nach einem der vorherigen Ansprüchen 1 bis 7, **dadurch gekennzeichnet, dass** die Winkel (β1-β4) der Schenkel (441-444) zur Senkrechten zur Ausbreitungsrichtung des kollimierten Lichts (310) von der Lichtquelle (300) zu der Unterseite (462) des Lichtleitbereichs (460) zunehmen.

9. Lichtleiter nach einem der vorherigen Ansprüche 2 bis 8, **dadurch gekennzeichnet, dass** die Flanke (451-453) einen Winkel (γ1-γ4) zur Senkrechten zur Ausbreitungsrichtung des kollimierten Lichts (310) in einem Winkelbereich zwischen 15° und 90° aufweist.

10. Lichtleiter nach einem der vorherigen Ansprüche 1 bis 9, **dadurch gekennzeichnet, dass** der Kollimator (421) zwischen der ersten Stufe (431) und der zweiten Stufe (432) eine erste kollimierende Kontur (422) aufweist und die erste Stufe (431) und die zweite Stufe (432) mittels der ersten kollimierenden Kontur (422) verbunden sind.

11. Lichtleiter nach einem der vorherigen Ansprüche, **dadurch gekennzeichnet, dass** der Kollimator (421) zwischen der zweiten Stufe (432) und der dritten Stufe (433) eine zweite kollimierende Kontur (423) aufweist und die zweite Stufe (432) und die dritte Stufe (433) mittels der zweiten kollimierenden Kontur (423) verbunden sind.
